(19) **Europäisches Patentamt** / **European Patent Office** / **Office européen des brevets**

(11) **EP 2 052 137 B1**

(12) **EUROPEAN PATENT SPECIFICATION**

(45) Date of publication and mention
of the grant of the patent:
**29.09.2010 Bulletin 2010/39**

(51) Int Cl.:
*F01N 11/00* (2006.01)  *F01N 3/20* (2006.01)
*F01N 3/08* (2006.01)  *F02D 41/02* (2006.01)

(21) Application number: **07804755.2**

(22) Date of filing: **13.08.2007**

(86) International application number:
**PCT/IB2007/002328**

(87) International publication number:
**WO 2008/020287 (21.02.2008 Gazette 2008/08)**

(54) **CATALYST MONITORING SYSTEM AND METHOD**

SYSTEM UND VERFAHREN ZUR KATALYSATORÜBERWACHUNG

SYSTÈME ET PROCÉDÉ DE SURVEILLANCE D'UN CATALYSEUR

(84) Designated Contracting States:
**DE FR**

(30) Priority: **14.08.2006 JP 2006221080**

(43) Date of publication of application:
**29.04.2009 Bulletin 2009/18**

(73) Proprietors:
• **TOYOTA JIDOSHA KABUSHIKI KAISHA**
**Aichi-ken, 471-8571 (JP)**
• **DENSO CORPORATION**
**Kariya-city,**
**Aichi-Pref. 448-8661 (JP)**

(72) Inventors:
• **SAWADA, Hiroshi**
**Aichi 471-8571 (JP)**
• **HORI, Tsunenobu**
**Aichi-Pref, 448-8661 (JP)**

(74) Representative: **TBK-Patent**
**Bavariaring 4-6**
**80336 München (DE)**

(56) References cited:
**EP-A- 0 735 250**  **US-A1- 2003 172 645**
**US-A1- 2006 053 772**

**Description**

BACKGROUND OF THE INVENTION

1. Field of the Invention

The invention relates to a catalyst monitoring system and method. More particularly, the invention relates to a catalyst monitoring system and method that monitors the deterioration state of an $NO_X$ storage-reduction catalyst which is arranged in an exhaust passage of an internal combustion engine.

2. Description of the Related Art

A three-way catalyst is widely used to purify exhaust gas of an internal combustion engine. The three-way catalyst is provided with oxygen storing material that stores oxygen. The three-way catalyst operates by storing and releasing oxygen to accurately maintain the stoichiometric air-fuel ratio within the catalyst, thus making it possible to purify the exhaust gas with high efficiency.

However, unless the air-fuel ratio of the exhaust gas that flows into the three-way catalyst is near the stoichiometric air-fuel ratio, highly efficient purification cannot be achieved. Therefore, in an internal combustion engine that may operate with a leaner air-fuel ratio than the stoichiometric air-fuel ratio (i.e., a lean air-fuel ratio), an $NO_X$ storage-reduction catalyst (hereinafter simply referred to as "$NO_X$ catalyst") is provided in the exhaust passage of the internal combustion engine. The $NO_X$ catalyst is provided with an $NO_X$ storing material that stores $NO_X$.

By providing the $NO_X$ catalyst, $NO_X$ in the exhaust gas may be stored in the $NO_X$ catalyst when the internal combustion engine is operating with the lean air-fuel ratio. Also, when purifying $NO_X$ stored in the $NO_X$ catalyst, control is performed that temporarily switches the air-fuel ratio from lean to rich or the stoichiometric air-fuel ratio (hereinafter, this control will simply be referred to as "rich spike"). Performing this rich spike introduces exhaust gas containing HC and CO and the like into the $NO_X$ catalyst. This HC and CO and the like are used as reducing agents to reduce (i.e., purify) the stored $NO_X$ to $N_2$, after which it is then released.

Meanwhile, even an internal combustion engine in which lean combustion is performed may operate with the stoichiometric air-fuel ratio depending on the operating region. While operating with the stoichiometric air-fuel ratio, the $NO_X$ catalyst may be used as a three-way catalyst. Therefore, the $NO_X$ catalyst is also provided with oxygen storing material in addition to the $NO_X$ storing material. When the internal combustion engine is operating with the lean air-fuel ratio, the oxygen storing material in the $NO_X$ catalyst becomes saturated with oxygen.

As this kind of $NO_X$ catalyst deteriorates, the oxygen and $NO_X$ storing capabilities decline. However, in this case, the manner in which the oxygen storage capability declines and the manner in which the $NO_X$ storage capability declines are not the same. Therefore, it is preferable to be able to determine the oxygen storage capability and the $NO_X$ storage capability separately in order to correctly diagnose the deterioration state of the $NO_X$ catalyst.

The document US2006/053772 describes a system that derives the $NO_X$ storage capability of an adsorber from the $NO_X$ release time during rich air-fuel ratio operation. When calculating the $NO_X$ release time, the $O_2$ release time is separately calculated and subtracted from a total $NO_X$ / $O_2$ release time as measured by respective oxygen sensors.

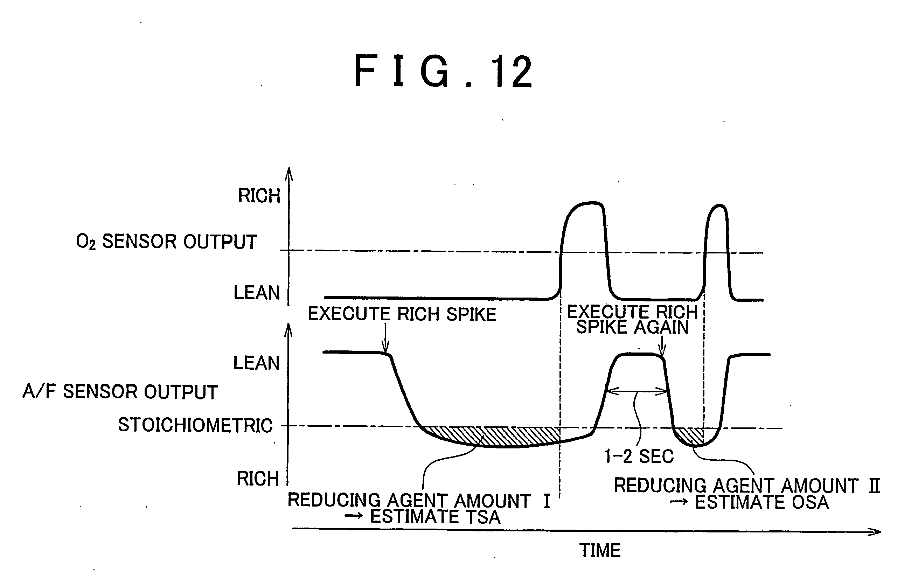

Japanese Patent No. 2827954 describes a system that may determine the oxygen storage capability and the $NO_X$ storage capability of an $NO_X$ catalyst separately by executing the rich spike two times in succession. FIG. 12 is a view illustrating the operation of this comparative example.

With the system described in Japanese Patent No. 2827954, an air-fuel ratio sensor (hereinafter simply referred to as "A/F sensor") is provided upstream of the $NO_X$ catalyst and an oxygen sensor (hereinafter simply referred to as "$O_2$ sensor") is provided downstream of the $NO_X$ catalyst. When the first rich spike is executed and reducing agents such as HC and CO flow into the $NO_X$ catalyst, the oxygen and $NO_X$ stored in the $NO_X$ catalyst react with those reducing agents and are consumed in the process. Then, when all of the oxygen and $NO_X$ that were stored in the $NO_X$ catalyst have been consumed, the reducing agents pass through to the downstream side of the $NO_X$ catalyst such that the output from the $O_2$ sensor which is provided downstream of the $NO_X$ catalyst changes from an output that indicates a lean air-fuel ratio to an output that indicates a rich air-fuel ratio. Accordingly, the amount of the reducing agents (i.e., "reducing agent amount I" in FIG. 12) that flow into the $NO_X$ catalyst by the time the output from the $O_2$ sensor changes to the rich air-fuel ratio, corresponds to the sum of the amounts of oxygen and $NO_X$ that have been stored in the $NO_X$ catalyst. Accordingly, the sum of the oxygen stored amount and the $NO_X$ stored amount in the $NO_X$ catalyst (hereinafter referred to as the "total stored amount") may be calculated based on the reducing agent amount I that is calculated based on the output from the A/F sensor which is provided upstream of the $NO_X$ catalyst.

When the first rich spike has ended, the air-fuel ratio returns to and is maintained at the lean air-fuel ratio until the oxygen storing material of the $NO_X$ catalyst becomes saturated with oxygen. Then, the second rich spike is executed when the oxygen storing material of the $NO_X$ catalyst becomes saturated with oxygen. In the second rich spike as well, the amount of reducing agents (i.e., "reducing agent amount II in FIG. 12) that flow into the $NO_X$ catalyst by the time the output from the downstream $O_2$ sensor changes to the rich air-fuel ratio, may be calculated based on the output from the upstream A/F sensor, just as described above.

Here, the time that it takes for the oxygen storing material of the $NO_X$ catalyst to become saturated with oxygen is extremely short (such as 1 to 2 seconds). That is, the time during for which the lean air-fuel ratio is maintained between the first rich spike and the second rich spike, is extremely short. Therefore, during this time, almost no $NO_X$ is stored in the $NO_X$ catalyst. That is, when the second rich spike starts, the oxygen storing material of the $NO_X$ catalyst is already saturated with oxygen, but an $NO_X$ amount that has been stored in $NO_X$ storing material of the $NO_X$ catalyst may be regarded as being zero. Therefore, the reducing agent amount II in the second rich spike corresponds to the oxygen stored amount in the $NO_X$ catalyst. Accordingly, the oxygen stored amount may be calculated from the reducing agent amount II. Thus, subtraction of the oxygen amount that has been stored during the second rich spike from the total stored amount corresponds to the $NO_X$ stored amount.

In this way, the system described in Japanese Patent No. 2827954 may separately detect the amount of stored oxygen, which is an indication of the oxygen storage capability, and the $NO_X$ stored amount, which is an indication of the $NO_X$ storage capability, in the $NO_X$ catalyst.

However, with the system described in Japanese Patent No. 2827954, the rich spike has to be executed at least two times in succession in order to separately calculate the oxygen stored amount and the $NO_X$ stored amount. Therefore, the rich spike has to be performed more frequently.

While the rich spike is being executed, the air-fuel ratio is made rich so the fuel injection quantity has to be increased. As a result, as the frequency of the rich spike increases, the fuel efficiency decreases by a corresponding amount.

Furthermore, at the start and end of the rich spike, the value of the air-fuel ratio is greatly changed between the lean air-fuel ratio and the rich air-fuel ratio. When the air-fuel ratio is changed, the emissions tend to deteriorate and torque shock tends to occur. Therefore, as the frequency of the rich spike increases, the deterioration of the emissions and the generation of torque shock tend to become significant.

SUMMARY OF THE INVENTION

The invention thus provides a catalyst monitoring system and method that may accurately monitor deterioration of an $NO_X$ storage-reduction catalyst, thereby suppressing adverse effects such as a decrease in fuel efficiency, a deterioration of emissions, and the generation of torque shock.

A first aspect of the invention thus relates to a catalyst monitoring system that includes a $NO_X$ catalyst which is arranged in an exhaust passage of an internal combustion engine, and a first exhaust gas sensor which is arranged downstream of the $NO_X$ catalyst and outputs a signal indicative of an air-fuel ratio of exhaust gas. More specifically, the first aspect relates to a catalyst monitoring system that further includes execution condition setting means for setting a plurality of different air-fuel ratio control execution conditions; air-fuel ratio controlling means for temporarily switching the air-fuel ratio of the exhaust gas of the internal combustion engine from the lean to the rich or stoichiometric air-fuel ratio when the plurality of different air-fuel ratio control execution conditions are satisfied; intake $NO_X$ amount obtaining means for estimating or detecting a total intake $NO_X$ amount that flows into the $NO_X$ catalyst between the time that air-fuel ratio control ends and the time that the air-fuel ratio control starts the next time; total stored amount calculating means for calculating a total stored amount based on the output from the first exhaust gas sensor during the air-fuel ratio control, the total stored amount corresponding to the sum of an stored amount of oxygen and an stored amount of $NO_X$ that have been stored in the $NO_X$ catalyst before the air-fuel ratio control started; and oxygen stored amount calculating means for calculating an oxygen stored amount of the total stored amount based on a relationship between the intake $NO_X$ amount and the total stored amount, which is established beforehand by executing the air-fuel ratio control with at least two different air-fuel ratio control execution conditions.

Also, the catalyst monitoring system may further include oxygen storage capability monitoring means for determining an oxygen storage capability of the $NO_X$ catalyst based on the calculated oxygen stored amount.

Further, the catalyst monitoring system may also include $NO_X$ stored amount calculating means for calculating a $NO_X$ stored amount by subtracting the oxygen stored amount from the total stored amount; and $NO_X$ storage capability monitoring means for determining an $NO_X$ storage capability of the $NO_X$ catalyst based on the calculated $NO_X$ stored amount.

Moreover, the plurality of different air-fuel ratio control execution conditions may include a condition that the intake $NO_X$ amount reaches a predetermined value, and the execution condition setting means may set the predetermined value as at least two levels.

Also, the oxygen stored amount calculating means may calculate a value corresponding to the total stored amount at the time when the intake $NO_X$ amount is zero by extrapolating the relationship between the intake $NO_X$ amount and the total stored amount, and may set the calculated value as the oxygen stored amount.

Further, the catalyst monitoring system may also include an upstream catalyst which is arranged upstream of the $NO_X$ catalyst; a second exhaust gas sensor which is arranged between the $NO_X$ catalyst and the upstream catalyst, and which outputs a signal according to the air-fuel ratio of the exhaust gas; and oxygen storage capacity calculating means for calculating an oxygen storage capacity of the upstream catalyst based on the output from the second exhaust gas sensor during the air-fuel ratio control. The total stored amount calculating means may calculate the total stored amount based on the outputs from the first and the second exhaust gas sensors during the air-fuel ratio control.

Also, the intake $NO_X$ amount obtaining means may estimate the intake $NO_X$ amount based on a relationship between i) a load and speed of the internal combustion engine and ii) an amount of $NO_X$ generated per unit time.

Moreover, the intake $NO_X$ amount obtaining means may detect the intake $NO_X$ amount based on an output from an $NO_X$ sensor which is arranged upstream of the $NO_X$ catalyst.

A second aspect of the invention relates to a catalyst monitoring method for a $NO_X$ catalyst which is arranged in an exhaust passage of an internal combustion engine. More specifically, the second aspect relates to a catalyst monitoring method that includes; a) setting a plurality of different air-fuel ratio control execution conditions ; b) switching the air-fuel ratio of the exhaust gas of the internal combustion engine temporarily from the lean to the rich or stoichiometric air-fuel ratio when the plurality of different air-fuel ratio control execution conditions are satisfied; c) estimating or detecting a total intake $NO_X$ amount that has flowed into the $NO_X$ catalyst between the time that the air-fuel ratio control ends and the time that another air-fuel ratio control starts; d) calculating a total stored amount based on the signal from the first exhaust gas sensor that is output during the air-fuel ratio control, the total stored amount corresponding to the sum of the stored amount of oxygen and the stored amount of $NO_X$ that have been stored in the $NO_X$ catalyst before the air-fuel ratio control starts; and e) calculating a oxygen stored amount out of the total stored amount based on a relationship between the intake $NO_X$ amount and the total stored amount. The relationship between the intake $NO_X$ amount and the total stored amount is established beforehand by executing the air-fuel ratio control with at least two different air-fuel ratio control execution conditions.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG 1 is a schematic view of a system configuration according to a first example embodiment of the invention;
FIGS. 2A to 2E are timing charts illustrating operation of the first example embodiment;
FIG 3 is a expanded view illustrating a part of the timing chart of FIG 2;
FIG 4 is a graph showing the relationship between an intake $NO_X$ amount into the $NO_X$ catalyst and the total stored amount;
FIG. 5 is another graph showing the relationship between the intake $NO_X$ amount into the $NO_X$ catalyst and the total stored amount;
FIG. 6 is still another graph showing the relationship between the intake $NO_X$ amount into the $NO_X$ catalyst and the total stored amount;
FIG 7 is yet another graph showing the relationship between the intake $NO_X$ amount into the $NO_X$ catalyst and the total stored amount;
FIG. 8 is a graph showing the relationship between the intake $NO_X$ amount into the $NO_X$ catalyst and a $NO_X$ stored amount;
FIG. 9 is a flowchart of a routine executed in the first example embodiment of the invention;
FIG. 10 is a schematic view of a system configuration according to a second example embodiment of the invention;
FIGS. 11A to 11C are timing charts illustrating operation of the second example embodiment; and
FIG. 12 is a view illustrating operation of a comparative system.

DETAILED DESCRIPTION OF EMBODIMENTS

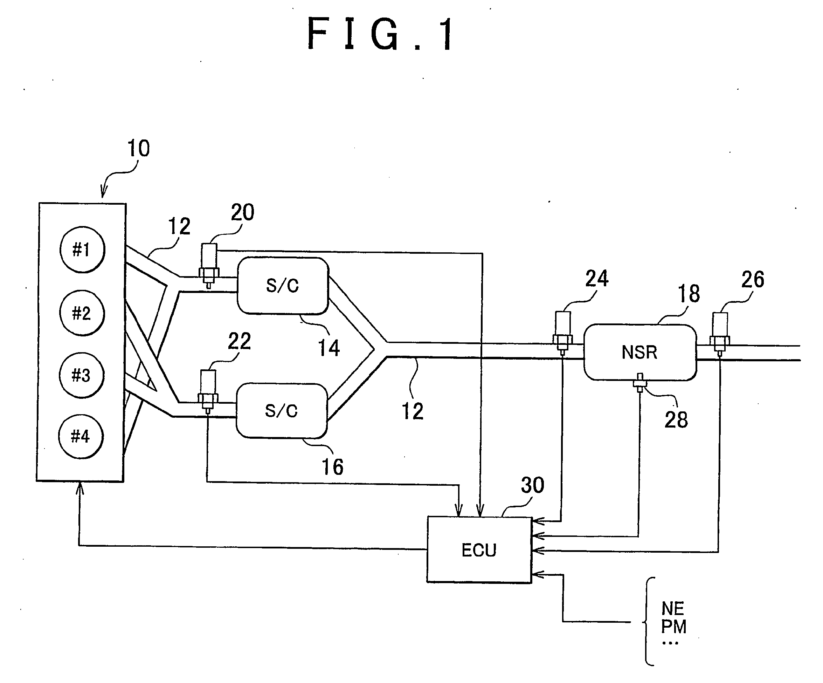

FIG. 1 is a schematic view of a system configuration according to a first example embodiment of the invention. The system shown in FIG 1 is provided with an internal combustion engine 10. The engine shown in the drawing is an inline four-cylinder internal combustion engine that has four cylinders "#1" to "#4". However, the number and arrangement of cylinders in the invention is not limited to the configuration shown in FIG. 1.

The internal combustion engine 10 is able to operate by burning fuel at an air-fuel ratio that is leaner than the stoichiometric air-fuel ratio (i.e., hereinafter, this air-fuel ratio will be referred to as "lean air-fuel ratio"). The internal combustion engine 10 may be any one of a port injection type internal combustion engine in which fuel is injected into an intake port, an in-cylinder direct injection type internal combustion engine in which fuel is injected directly into the cylinder, and a combination employing both port injection and in-cylinder direct injection.

Provided midway in an exhaust passage 12 of the internal combustion engine 10 are two start catalysts (S/C) 14 and 16, and one $NO_X$ catalyst (NSR) 18. Exhaust gas from the #1 and #4 cylinders flows into the start catalyst 14 while exhaust gas from the #2 and #3 cylinders flows into the start catalyst 16. The exhaust gas that has passed through the start catalyst 14 merges with the exhaust gas that has passed through the start catalyst 16 and together they flow into the $NO_X$ catalyst 18.

The start catalysts 14 and 16 function as three-way catalysts that may simultaneously purify HC, CO, and $NO_X$ with the storage and release of oxygen when the air-fuel ratio of the inflowing exhaust gas is near the stoichiometric air-fuel ratio. It is to be understood that "storage" used herein means retention of a substance (solid, liquid, gas molecules) in the form of at least one of adsorption, adhesion, absorption, trapping, occlusion, and others.

Meanwhile, the $NO_X$ catalyst 18 functions as an $NO_X$ storage reduction catalyst, that is, stores $NO_X$ when the air-fuel ratio of the inflowing exhaust gas is lean, and purifies the stored $NO_X$ by reducing the stored $NO_X$ to $N_2$ when the air-fuel ratio of the inflowing exhaust gas is rich or stoichiometric, thereby releasing $N_2$. Furthermore, this $NO_X$ storage-reduction catalyst 18 is also able to store oxygen and functions as a three-way catalyst when the air-fuel ratio of the inflowing exhaust gas is near the stoichiometric air-fuel ratio.

In the exhaust passage 12, an A/F sensor 20 is arranged upstream of the start catalyst 14, an A/F sensor 22 is arranged upstream of the start catalyst 16, an A/F sensor 24 is arranged upstream of the $NO_X$ catalyst 18, and an $O_2$ sensor 26 is arranged downstream of the $NO_X$ catalyst 18.

The A/F sensors 20, 22, and 24 are air-fuel ratio sensors that produce linear outputs indicative of the air-fuel ratio of the exhaust gas. Also, the $O_2$ sensor 26 is an oxygen sensor that produces an output that abruptly changes depending on whether the air-fuel ratio of the exhaust gas is richer or leaner than the stoichiometric air-fuel ratio.

A temperature sensor 28 that detects a temperature (bed temperature) TCAT of the $NO_X$ catalyst 18 is arranged in the $NO_X$ catalyst 18. Incidentally, the temperature TCAT of the $NO_X$ catalyst 18 may be estimated from the exhaust gas temperature detected by an exhaust gas sensor provided upstream or downstream of the $NO_X$ catalyst 18 instead of being directly detecting. Alternatively, the temperature TCAT of the $NO_X$ catalyst 18 may be estimated based on the operating state of the internal combustion engine 10.

Also, an intake system, not shown, which draws in and distributes air to the cylinders is connected to the internal combustion engine 10.

The system according to the first example embodiment includes an ECU (Electronic Control Unit) 30. This ECU 30 is electrically connected to, in addition to the sensors described above, various sensors that detect the engine speed NE, the intake air pressure PM, the intake air amount GA, and the throttle opening amount TH, and the like. The ECU 30 is also electrically connected to various actuators of fuel injectors, spark plugs, and a throttle valve, and the like.

The internal combustion engine 10 operates by burning fuel at the lean air-fuel ratio in a predetermined operating region. While operating with the lean air-fuel ratio, $NO_X$ is unable to be purified in the start catalysts 14 and 16 so $NO_X$ is temporarily stored in the $NO_X$ catalyst 18. When $NO_X$ accumulates in the $NO_X$ catalyst 18, the ECU 30 executes "rich spike" that temporarily switches the combustion air-fuel ratio of the internal combustion engine 10 from lean to rich or the stoichiometric air-fuel ratio. Here, rich spike may be regarded as "air-fuel ratio control" of the invention.

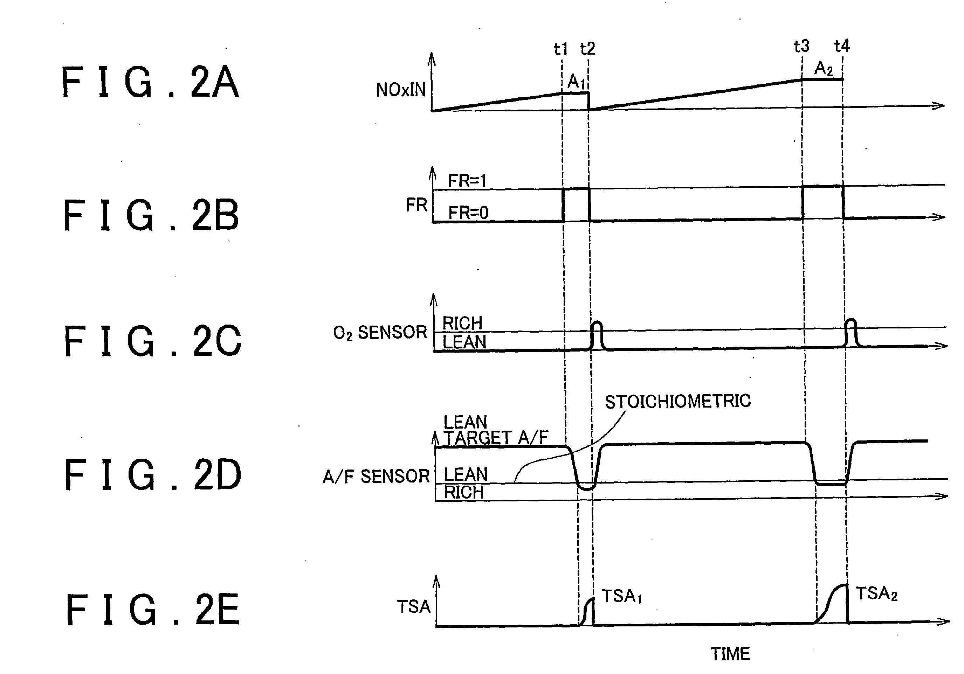

FIGS. 2A to 2E are timing charts illustrating the operation of the first example embodiment. Hereinafter, the operation of the first example embodiment will be described with reference to FIG. 2A to 2E. The time along the horizontal axes in FIGS. 2A to 2E represents the time that has passed after rich spike has ended and the combustion air-fuel ratio of the internal combustion engine 10 has returned to the lean air-fuel ratio. Also in FIGS. 2A to 2E, the operation that includes the execution of another rich spike twice thereafter is shown.

$NO_X IN$ shown in FIG. 2A represents an integrated amount of $NO_X$ that flows into the $NO_X$ catalyst 18. In this first example embodiment, a relationship between i) the load and speed of the internal combustion engine 10 and ii) the amount of $NO_X$ generated per unit time is established through testing beforehand, and that relationship is then stored in advance in the ECU 30. Then based on that relationship, the ECU 30 calculates the amount of $NO_X$ generated per unit time at the current load and speed of the internal combustion engine 10, and calculates an integrated amount of $NO_X$ generated per unit time as $NO_X IN$. When the air-fuel ratio returns to the lean air-fuel ratio after the internal combustion engine 10 has been operated at the stoichiometric air-fuel ratio or an air-fuel ratio that is richer than the stoichiometric air-fuel ratio, the $NO_X IN$ is reset. That is, $NO_X IN$ represents the total amount (an estimated value thereof) of $NO_X$ that has flowed into the $NO_X$ catalyst 18 after the rich spike has ended.

In this invention, the method for calculating $NO_X IN$ is not limited to the method of estimating $NO_X IN$ from the operating state of the internal combustion engine 10. That is, an $NO_X$ sensor that detects the $NO_X$ concentration may be arranged upstream of the $NO_X$ catalyst 18, and $NO_X IN$ may be calculated based on an output from that $NO_X$ sensor.

FIG. 2C is a graph illustrating an output from the $O_2$ sensor 26 which is arranged downstream of the $NO_X$ catalyst 18, and FIG. 2D is a graph illustrating an output from the A/F sensor 24 which is arranged upstream of the $NO_X$ catalyst 18. When the internal combustion engine 10 is operated at the lean air-fuel ratio, exhaust gas of the lean air-fuel ratio flows through the exhaust passage 12. Therefore, when the internal combustion engine 10 is operated at the lean air-fuel ratio, the output from the $O_2$ sensor 26 indicates the lean air-fuel ratio, and the output from the A/F sensor 24 indicates a lean target air-fuel ratio of the internal combustion engine 10.

As shown in FIG 2A, when the internal combustion engine 10 is operated at the lean air-fuel ratio, $NO_X IN$ increases monotonically. When $NO_X IN$ reaches a predetermined value $A_1$, the rich spike starts (time t1). FIG. 2B is a timing chart of an execution flag FR of the rich spike. This execution flag FR of the rich spike is "1" when the rich spike is being executed, and "0" when the rich spike is not being executed.

When the rich spike starts, the combustion air-fuel ratio of the internal combustion engine 10 changes from the lean to the rich air-fuel ratio. Therefore, exhaust gas of the rich air-fuel ratio that includes large quantities of reducing agents such as HC and CO flows into the start catalysts 14 and 16. Then when all of the oxygen that was stored in the start catalysts 14 and 16 is used up, exhaust gas of the rich air-fuel ratio starts to pass through to the downstream side of the start catalysts 14 and 16. As a result, the output from the A/F sensor 24 changes from the lean to the rich air-fuel ratio, as shown in FIG. 2D.

When the internal combustion engine 10 is operated at the lean air-fuel ratio, oxygen storing material in the $NO_X$ catalyst 18 soon becomes saturated with oxygen. Therefore, when the rich spike starts, oxygen to reach the maximum oxygen storage capacity OSC is already stored in the $NO_X$ catalyst 18.

On the other hand, the value of $NO_X IN$ which is a rich spike starting condition (i.e., the predetermined value $A_1$ described above) is set so that the rich spike starts before the $NO_X$ stored amount in the $NO_X$ catalyst 18 reaches the maximum $NO_X$ storage capacity NSC (i.e., a predetermined value $A_2$ which will be described later is also similar). Accordingly, when the rich spike starts, $NO_X$ of an amount that is less than the maximum $NO_X$ storage capacity NSC is stored in the $NO_X$ catalyst 18.

When exhaust gas that contains reducing agents such as HC and CO flows into the $NO_X$ catalyst 18, the oxygen and $NO_X$ stored in the $NO_X$ catalyst 18 are consumed in a reaction that takes place with those reducing agents. During this time, the output from the $O_2$ sensor 26 is maintained at the lean air-fuel ratio. Also, when all of the oxygen and $NO_X$ that was stored in the $NO_X$ 18 is consumed, rich exhaust gas that contains reducing agents starts to pass through to the downstream side of the $NO_X$ catalyst 18. As a result, the output from the $O_2$ sensor 26 changes from the "lean air-fuel ratio" to the "rich air-fuel ratio" (time t2). At the time t2, this rich spike ends.

In this way, there is a correlation between the amount of reducing agents that has flowed into the $NO_X$ catalyst 18 between the time the output from the $O_2$ sensor 26 changed from the lean air-fuel ratio to the rich air-fuel ratio and both the amount of oxygen (hereinafter, referred to as the "oxygen stored amount OSA") and $NO_X$ (hereinafter referred to as the "$NO_X$ stored amount NSA") that have been stored in the $NO_X$ catalyst 18 before the rich spike starts. In this first example embodiment, the value corresponding to the sum of the oxygen stored amount OSA and the $NO_X$ stored amount NSA will be represented by a total stored amount TSA which will be described below.

The total stored amount TSA is the sum of the $NO_X$ stored amount NSA that has been converted to oxygen, and the oxygen stored amount OSA. In the system in this first example embodiment, the total stored amount TSA may be obtained based on the amount of reducing agent that has flowed into the $NO_X$ catalyst 18, as will be described later.

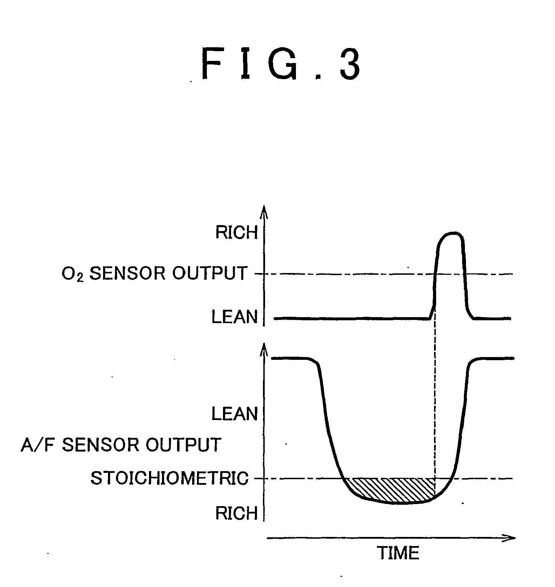

FIG. 3 is an expanded view of the portions in FIG. 2C and 2D at the time the rich spike is executed. The reducing agent that flows into the $NO_X$ catalyst 18 is unburned fuel in the exhaust gas. Therefore, the amount of reducing agent that flows into the $NO_X$ catalyst 18 may be calculated based on the hatched portion in the graph of the A/F sensor output in FIG 3. Accordingly, the total stored amount TSA may be calculated using Expression (1) below.

$$TSA = \left| 0.23 \times GA/(A/F) \times (A/F\text{-}14.6) \right| \times \text{Calculation routine cycle} \dots (1)$$

where "0.23" is a conversion coefficient to $O_2$, "GA/(A/F)" is an amount of fuel flowing into the $NO_X$ catalyst 18 per unit time, "A/F-14.6" is width of the hatched portion in FIG. 3, and "$|0.23 \times GA/(A/F) \times (A/F\text{-}14.6)|$" is an amount of $O_2$ consumed per unit time. In addition, "GA" is the intake air amount of the internal combustion engine 10, "A/F" is the air-fuel ratio of the exhaust gas that flows into the $NO_X$ catalyst 18, and "14.6" is the stoichiometric air-fuel ratio. The intake air amount GA may be obtained based on an output from an airflow meter, for example. Also, the air-fuel ratio A/F may be obtained based on the output from the A/F sensor 24. Alternatively, the air-fuel ratio A/F may be obtained from the intake air amount GA and the fuel injection quantity.

The ECU 30 performs the calculation in Expression (1) above each time a predetermined calculation routine is executed. TSA calculated from Expression (1) above represents the amount of oxygen that corresponds to the amount of reducing agent that has flowed into the $NO_X$ catalyst 18 during the execution cycle. The ECU 30 integrates TSA that is calculated from Expression (1) above after the output from the A/F sensor 24 has changed from a "lean air-fuel ratio" to a "rich air-fuel ratio". Thus, this integrated value of TSA represents the integrated amount of oxygen that corresponds to the integrated amount of reducing agent that has flowed into the $NO_X$ catalyst 18 after the output from the A/F sensor 24 has changed from the lean air-fuel ratio to the rich air-fuel ratio. FIG. 2E shows the integrated value of TSA.

As described above, when the output from the $O_2$ sensor 26 has changed from the lean air-fuel ratio to the rich air-fuel ratio (i.e., at time t2), it may be determined that the oxygen and $NO_X$ that were stored in the $NO_X$ catalyst 18 have all been consumed. Accordingly, the integrated value of TSA at the time t2 corresponds to the total stored amount TSA. That is, in the example shown in FIG. 2E, $TSA_1$ at time t2 is the total stored amount TSA before the rich spike started. Incidentally, when the rich spike ends, the integrated value of TSA is reset.

Thus far the first rich spike in FIG. 2 has been described. After time t2 when this rich spike ends, the combustion air-fuel ratio returns to the lean target air-fuel ratio and the internal combustion engine 10 operates at the lean air-fuel ratio. Then after a while, another rich spike is executed for the second time.

The first rich spike is executed (started) on the condition that $NO_X$IN has reached the predetermined value $A_1$, as described above. In contrast, as shown in FIG. 2A, the second rich spike is executed (started) (i.e., at time t3) on the condition that $NO_X$IN has reached the predetermined value $A_2$ that is not equal to $A_1$ (in the drawing, $A_1$ is less than $A_2$).

The operation during the second rich spike is similar to the operation during the first rich spike except that the execution condition of rich spike is different (i.e., $A_1$ is not equal to $A_2$), as described above. That is, the second rich spike ends when the output from the $O_2$ sensor 26 changes from the lean air-fuel ratio to the rich air-fuel ratio (i.e., at time t4). $TSA_2$ at the time t4 is the total stored amount TSA before the second rich spike started.

According to the control shown in FIG. 2 described above, it is possible to detect both the total stored amount $TSA_1$ where $NO_X$IN, i.e., the total amount of $NO_X$ that has flowed into the $NO_X$ catalyst 18 is $A_1$ between the time that the first rich spike has ended and the time that the second rich spike starts (hereinafter this total amount of $NO_X$ will be referred to as "intake $NO_X$ amount") and the total stored amount $TSA_2$ where the intake $NO_X$ amount is $A_2$.

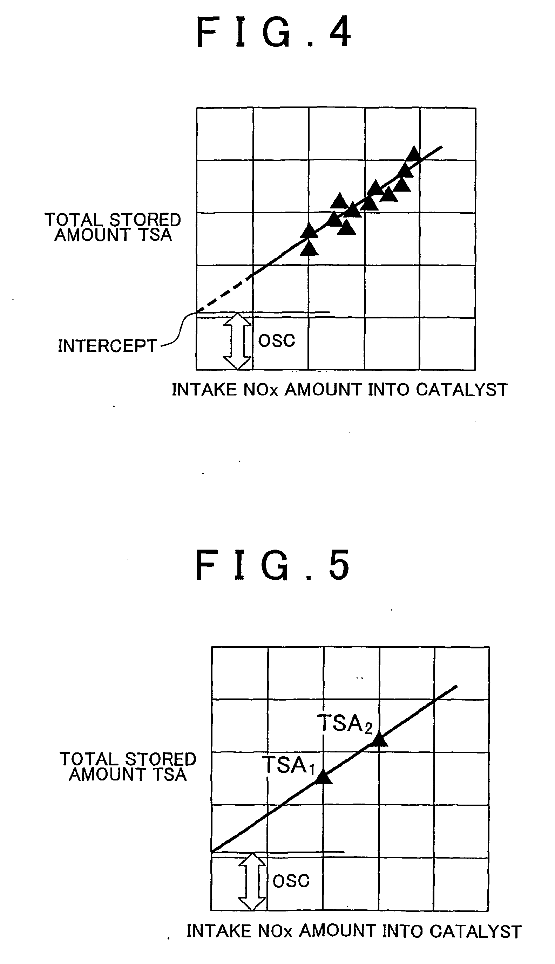

In this way, with the system according to the first example embodiment, the intake $NO_X$ amount into the $NO_X$ catalyst 18 is set to a plurality of different levels and the total stored amount TSA may be detected at each level. FIG. 4 is a graph in which test results each time the value of the intake $NO_X$ amount was changed and the total stored amount TSA was detected, which was done a plurality of times, are plotted on a coordinate system in which the horizontal axis represents the intake $NO_X$ amount and the vertical axis represents the total stored amount TSA. Incidentally, each rich spike has been executed under substantially the same operating conditions. As shown in FIG. 4, each point indicating the intake $NO_X$ amount and the total stored amount TSA each time the rich spike was performed lies on a generally straight line. Accordingly, the $NO_X$ stored amount NSA in the total stored amount TSA may increase proportionately as the intake $NO_X$ amount increases.

On the other hand, as described above, when the internal combustion engine 10 is operating at the lean air-fuel ratio, the $NO_X$ catalyst 18 soon becomes saturated with oxygen. Therefore, when the rich spike starts, the $NO_X$ catalyst 18 is already saturated with oxygen up to the oxygen storage capacity OSC. Accordingly, the oxygen stored amount OSA in the total stored amount TSA may be equal to the oxygen storage capacity OSC regardless of the intake $NO_X$ amount.

If the intake $NO_X$ amount is zero, the $NO_X$ stored amount NSA is of course zero so the entire total stored amount TSA in this case corresponds to the oxygen stored amount OSA. As shown in FIG. 4, by extrapolating the straight line in FIG 4 the value of the total stored amount TSA when the intake $NO_X$ amount is zero may be obtained as an intercept of this straight line. This intercept value is equal to the oxygen stored amount OSA of the $NO_X$ catalyst 18, and thus equal to the oxygen storage capacity OSC of the $NO_X$ catalyst 18.

As described above, in the first example embodiment, the value of the oxygen stored amount OSA which is obtained based on the total stored amount TSA of the $NO_X$ catalyst 18 is equal to the value of the oxygen storage capacity OSC of the $NO_X$ catalyst 18. Thus, the value of the oxygen stored amount OSA will simply be referred to as the "oxygen storage capacity OSC" in the following description, for the sake of convenience.

FIG. 5 is a graph in which the total stored amounts $TSA_1$ and $TSA_2$ and the intake oxygen amounts $A_1$ and $A_2$ during the second rich spike shown in FIG. 2 are plotted on the same coordinate system as that shown in FIG. 4. As shown in FIG 5, in this invention, if the total stored amount TSA is detected at least once for each of at least two different levels of the intake $NO_X$ amount, a straight line that represents the relationship between the intake $NO_X$ amount and the total stored amount TSA may be drawn so the oxygen storage capacity OSC may be estimated.

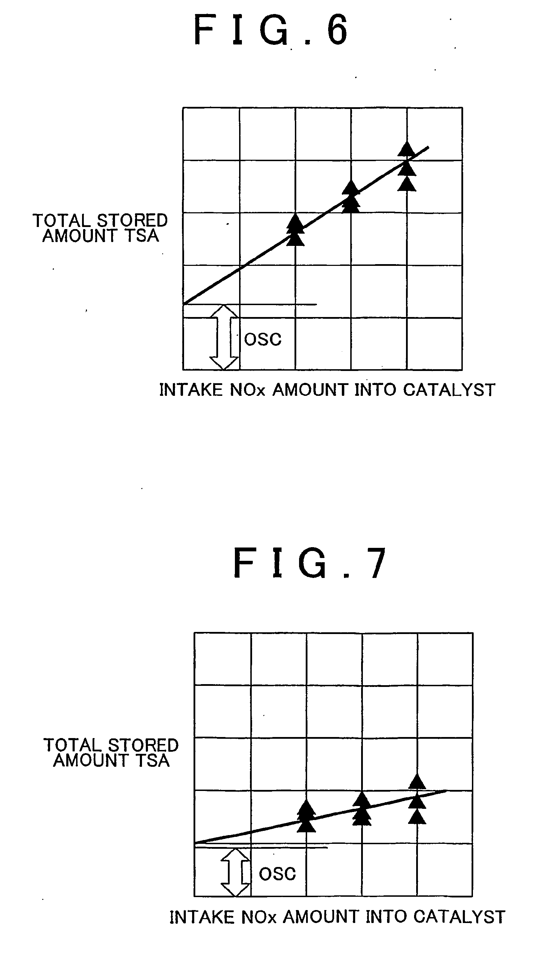

Accordingly, in the invention, the oxygen storage capacity OSC may also be estimated based on the total stored amount TSA detected at three or more different levels of the intake $NO_X$ amount. Also, the rich spike is executed two or more times at each level of the intake $NO_X$ amount and the oxygen storage capacity OSC may be estimated based on the total stored amounts TSA obtained from those executions. FIG. 6 is a graph in which a total of nine points are plotted on the same coordinate system as in FIG. 4 when the total stored amount TSA was detected after executing the rich spike three times at three different levels of the intake $NO_X$ amount (i.e., $A_1$, $A_2$, $A_3$).

As shown in FIG. 6, when there are at least two points, a straight line that represents relationship between the intake $NO_X$ amount and the total stored amount TSA may be obtained by executing a linear approximation according to the least-square method, for example, with respect to those points. The oxygen storage capacity OSC may then be obtained by extrapolating the straight line. In such a case, the oxygen storage capacity OSC may be estimated with even greater accuracy.

In this way, according to this first example embodiment, the oxygen storage capacity OSC of the $NO_X$ catalyst 18 may be accurately estimated without executing the rich spike two times in succession. The $NO_X$ reduction performance when the $NO_X$ catalyst 18 is used under the stoichiometric air-fuel ratio may be determined by the oxygen storage capability of the $NO_X$ catalyst 18. As the $NO_X$ catalyst 18 deteriorates, the oxygen storage capability of the $NO_X$ catalyst 18 also declines. The oxygen storage capability may be detected by the value of the oxygen storage capacity OSC.

Accordingly, it is possible to accurately determine whether the oxygen storage capability of the $NO_X$ catalyst 18 is normal (i.e., is within an allowable range) by beforehand setting a predetermined determining value for determining the oxygen storage capability of the $NO_X$ catalyst 18 and comparing the oxygen storage capacity OSC that was estimated in the manner described above with the determining value, for example.

Also, in FIGS. 4 to 6, a steeper slope of the straight line representing the relationship between the intake $NO_X$ amount and the total stored amount TSA indicates that a greater percentage of inflowing $NO_X$ is captured by the $NO_X$ catalyst 18. That is, it could be said that the slope of this straight line indicates the $NO_X$ storage capability of the $NO_X$ catalyst 18 (i.e., the $NO_X$ reducing performance when the $NO_X$ catalyst 18 is used under the lean air-fuel ratio).

Accordingly, it is possible to accurately determine whether the $NO_X$ storage capability of the $NO_X$ catalyst 18 is normal (i.e., is within an allowable range) by beforehand setting a predetermined determining value for determining the $NO_X$ storage capability of the $NO_X$ catalyst 18 and comparing the slope of the straight line that represents the relationship between the intake $NO_X$ amount and the total stored amount TSA with that predetermined determining value.

FIG. 7 is a graph on which are plotted the results of a similar test to FIG. 6. However, the test that showed the results in FIG. 7 was performed on an $NO_X$ catalyst 18 in which deterioration has progressed more than the $NO_X$ catalyst 18 for which the results are shown in FIG 6. That is, the $NO_X$ catalyst 18 corresponding to FIG. 7 has a higher degree of deterioration than the $NO_X$ catalyst 18 corresponding to FIG. 6. Accordingly, the straight line in FIG 7 has a smaller a slope (i.e., less $NO_X$ storage capability) and intercept (i.e., a smaller oxygen storage capacity OSC) than the straight line in FIG. 6.

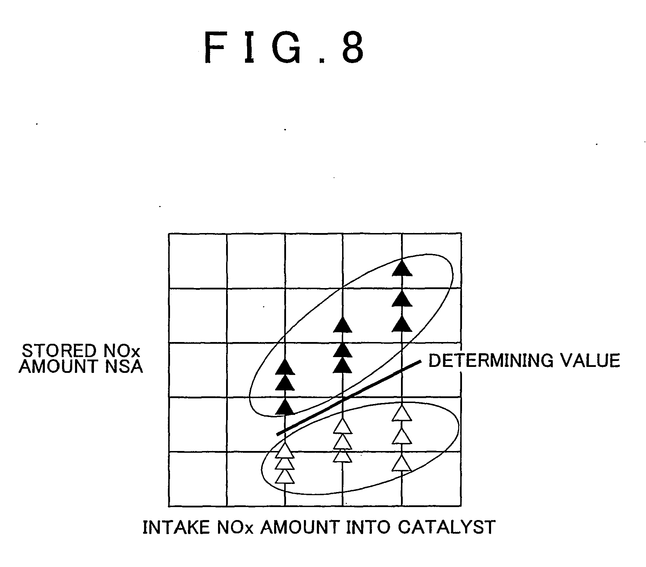

FIG 8 is a graph in which the $NO_X$ stored amount NSA for the nine test results shown in FIG. 6 are plotted as black triangles and the $NO_X$ stored amount NSA for the nine test results shown in FIG. 7 are plotted as white triangles on a coordinate system, where the horizontal axis represents the intake $NO_X$ amount and the vertical axis represents the $NO_X$ stored amount NSA.

Incidentally, the $NO_X$ stored amount NSA may be calculated by the following expression based on the total stored amount TSA and the oxygen storage capacity OSC.

$$NSA = (TSA - OSC) \times 46 / 32 \dots (2)$$

where "46 / 32" is a conversion coefficient from $O_2$ to $NO_2$.

When a predetermined determining value is set like the sloped straight line in FIG. 8, the nine $NO_X$ stored amounts NSA for the $NO_X$ catalyst 18 in FIG. 6 which is not deteriorated are all above the sloped straight line. On the other hand, the nine $NO_X$ stored amounts NSA for the $NO_X$ catalyst 18 in FIG. 7 which is deteriorated are all below that straight line. In this way, it is apparent that there is an accurate correlation between the $NO_X$ stored amount NSA and the degree of deterioration.

Accordingly, in this first example embodiment it is possible to accurately determine whether the $NO_X$ storage capability of the $NO_X$ catalyst 18 is normal (i.e., is within an allowable range) by beforehand setting a determining value such as the sloped straight line in FIG. 8 and comparing the detected intake $NO_X$ amount and $NO_X$ stored amount NSA with that determining value. That is, the $NO_X$ storage capability may also be determined by using the determining value instead of using the slope of the straight line that represents the relationship between the intake $NO_X$ amount and the total stored amount TSA.

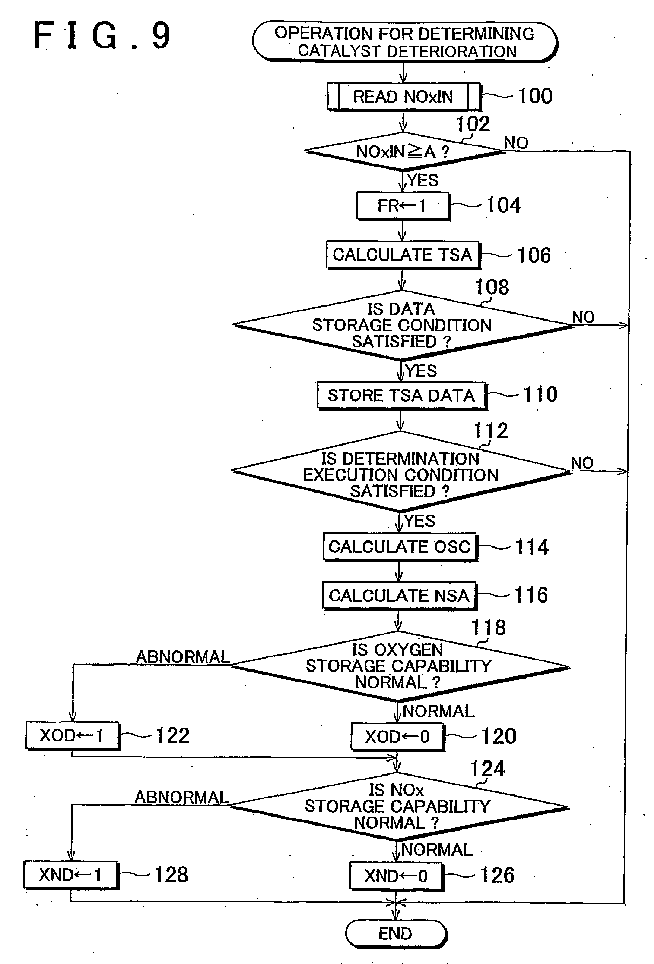

FIG 9 is a flowchart of a routine executed by the ECU 30 in order to determine (diagnose) deterioration of the $NO_X$ catalyst 18 according to the method described above in the first example embodiment. This routine is repeatedly executed at predetermined intervals of time.

In the routine shown in FIG. 9, first the value of $NO_X IN$ that has added up the amount of $NO_X$ that has flowed into the $NO_X$ catalyst 18 is read (step 100). Next it is determined whether the $NO_X IN$ has reached a predetermined value A (step 102). This predetermined value A is a value that is set as the intake $NO_X$ amount flowing into the $NO_X$ catalyst 18 when rich spike starts. As described above, in this first example embodiment, the rich spike is executed at each of at least two different levels of the intake $NO_X$ amount. When the rich spike is executed for two different levels of the intake $NO_X$ amount, two values, i.e., $A_1$ and $A_2$, are prepared as the predetermined value A. Also, when the rich spike is executed at three different levels of the intake $NO_X$ amount, three values, i.e., $A_1$, $A_2$, and $A_3$, are prepared as the predetermined value A. In step 102, one of these predetermined values A is selected and compared with $NO_X IN$.

If it is determined in step 102 that $NO_XIN$ has not yet reached the predetermined value A, then it is determined that the execution condition of the rich spike is not satisfied. In this case, this cycle of the routine directly ends and the internal combustion engine continues to operate at the lean air-fuel ratio.

If, on the other hand, it is determined in step 102 that $NO_XIN$ has reached the predetermined value A, then it is determined that the rich spike execution condition is satisfied. In this case, the rich spike is executed and the execution flag FR of the rich spike is set to "1" (step 104). While the rich spike is being executed, an integrated value of TSA as shown in FIG 2E is calculated (step 106).

Next it is determined whether a condition that the integrated value of TSA calculated in step 106 should be stored as data of the total stored amount TSA used to determine deterioration of the $NO_X$ catalyst 18 (hereinafter, this condition will simply be referred to as "data storing condition") is satisfied (step 108). The data storing conditions are: (a) the rich spike has ended; (b) the operating conditions (such as the engine speed NE, the throttle opening amount TH, and the intake air amount GA) when the rich spike is executed are within predetermined ranges; and (c) the temperature TCAT of the $NO_X$ catalyst 18 when the rich spike is executed is within a predetermined range.

Condition (a) above is a necessary requirement because the integrated value of TSA at the time that the rich spike ends is a value that should be input as the total stored amount TSA, as described above. Condition (b) above is a condition provided so that only data obtained when the rich spike is executed under predetermined operating conditions such as no sudden acceleration or deceleration, is used as the basis for the catalyst deterioration determination in order to prevent an erroneous determination due to a calculation error of the $NO_XIN$ or the like. Condition (c) above is a condition to prevent an erroneous determination due to the effect of the temperature of the $NO_X$ catalyst 18. That is, the purifying capability of the $NO_X$ catalyst 18 changes depending on its temperature. Therefore, condition (c) above is provided so that only data obtained when the rich spike is executed within a temperature range is used as the basis for the catalyst deterioration determination because the purifying capability of the $NO_X$ catalyst 18 may be regarded as being constant within the temperature range.

When it is determined in step 108 that all of the conditions (a) to (c) above are satisfied, the integrated value of TSA that was calculated in step 106 is linked to the predetermined value A (i.e., the intake $NO_X$ amount) that was selected in step 102 as data of the total stored amount TSA used for the catalyst deterioration determination, and stored in the ECU 30 (step 110).

Incidentally, even if the rich spike is executed within a temperature range deviated from condition (c) above, the integrated value of TSA may also be converted to a value that may be obtained within the temperature range of condition (c) above by performing a correction such as multiplying the integrated value of TSA by a correction coefficient. Accordingly, when condition (c) above is not satisfied, the integrated value of TSA may be stored as data of the total stored amount TSA after the integrated value of TSA has been corrected in a predetermined manner.

Once the data of the total stored amount TSA is stored, it is then determined whether a condition for executing the catalyst deterioration determination is satisfied (step 112). More specifically, it is determined whether the data of the total stored amount TSA for the rich spike that was executed with at least two levels of the intake $NO_X$ amount is stored. That is, it is determined that the deterioration determination execution condition is satisfied when the data of at least two points, which is necessary to calculate the oxygen storage capacity OSC, is stored, as described with reference to FIG. 5. Also, when the oxygen storage capacity OSC is calculated based on predetermined data of three or more points, as shown in FIG. 6, it may be determined that the deterioration determination execution condition is satisfied when the predetermined data is assembled.

If it is determined in step 112 that the deterioration determination execution condition is not satisfied, this cycle of the routine directly ends. In this case, when the routine is executed the next time and thereafter, it is determined whether the rich spike execution condition is satisfied after the predetermined value A selected in step 102 has been changed as necessary.

If, on the other hand, it is determined in step 112 that the deterioration determination execution condition is satisfied, then the oxygen storage capacity OSC is calculated based on the stored data (step 114). That is, the oxygen storage capacity OSC is calculated according to the method described above with reference to FIG. 5 or FIG. 6. Then the $NO_X$ stored amount NSA is calculated based on Expression (2) above.

Next it is determined whether the oxygen storage capability of the $NO_X$ catalyst 18 is normal based on the oxygen storage capacity OSC that was calculated in step 114 above (step 118). More specifically, the value of that oxygen storage capacity OSC is compared with a predetermined determining value and if the value of the oxygen storage capacity OSC is equal to or greater than that predetermined determining value, the oxygen storage capability is determined to be normal. In this case, a flag XOD is set to "0" (step 120) to indicate that the oxygen storage capability of the $NO_X$ catalyst 18 is normal. If, on the other hand, the value of the oxygen storage capacity OSC is less than that predetermined determining value, it is determined that the oxygen storage capability is abnormal. In this case; the flag XOD is set to "1" (step 122) to indicate that the oxygen storage capability of the $NO_X$ catalyst 18 is abnormal (i.e., to indicate that the allowable range of the $NO_X$ catalyst 18 has been exceeded and the $NO_X$ catalyst 18 is deteriorating).

Continuing on, it is determined whether the $NO_X$ storage capability of the $NO_X$ catalyst 18 is normal based on the $NO_X$ stored amount NSA that was calculated in step 116 (step 124). More specifically, the value of that $NO_X$ stored amount NSA is compared with a predetermined determining value such as that shown in FIG. 8 and if the value of that $NO_X$ stored amount NSA is equal to or greater than that predetermined determining value, the $NO_X$ storage capability is determined to be normal. In this case, a flag XND is set to "0" (step 126) to indicate that the $NO_X$ storage capability of the $NO_X$ catalyst 18 is normal. If, on the other hand, the value of the $NO_X$ stored amount NSA is less than that predetermined determining value, it is determined that the $NO_X$ storage capability is abnormal. In this case, the flag XND is set to "1" (step 128) to indicate that the $NO_X$ storage capability of the $NO_X$ catalyst 18 is abnormal (i.e., to indicate that the allowable range of the $NO_X$ catalyst 18 has been exceeded and the $NO_X$ catalyst 18 is deteriorating).

Incidentally, the $NO_X$ storage capability in step S124 may be determined based on the slope of a straight line representing the relationship between the intake $NO_X$ amount and the total stored amount TSA, as described above.

As described above, according to the routine illustrated in FIG. 9, the total stored amount TSA of the $NO_X$ catalyst 18 may be broken down. That is, the oxygen storage capacity OSC (oxygen stored amount OSA) and the $NO_X$ stored amount NSA may each be calculated. Then using each of these values, the oxygen storage capability, which is the reference for the capability when the $NO_X$ catalyst 18 is used under the stoichiometric air-fuel ratio, and the $NO_X$ storage capability, which is the reference for the capability when the $NO_X$ catalyst 18 is used under the lean air-fuel ratio, may be determined separately. Accordingly, the deterioration state of the $NO_X$ catalyst 18 may be accurately diagnosed.

Also in this invention, it is not necessary to successively execute the rich spike at short intervals (i.e., intervals during which almost no $NO_X$ is stored in the $NO_X$ catalyst 18). That is, the foregoing effects may be obtained by executing the rich spike at intervals close to the intervals at which the rich spike is normally executed. Accordingly, it is possible to prevent the rich spike from being executed more frequently, which in turn makes it is possible to prevent adverse effects such as a deterioration of fuel efficiency and emissions, and an increased tendency for torque shock to be generated.

Also, in the first example embodiment described above, the $NO_X$ catalyst 18 may be regarded as the "$NO_X$ catalyst" of the invention, and the $O_2$ sensor 26 may be regarded as the "first exhaust gas sensor" of the invention. Further, the ECU 30 may be regarded as the "execution condition setting means" of the invention by executing the process in step 102, as the "air-fuel ratio controlling means" of the invention by executing the process in step 104, as the "intake $NO_X$ amount obtaining means" of the invention by executing the process in step 100, as the "total stored amount calculating means" of the invention by executing the process in step 106, and as the "oxygen stored amount calculating means" of the invention by executing the process in step 114.

Also, the ECU 30 may be regarded as the "oxygen storage capability monitoring means" of the invention by executing the processes in steps 118 to 122, and as "$NO_X$ storage capability monitoring means" of the invention by executing the processes in steps 124 to 128.

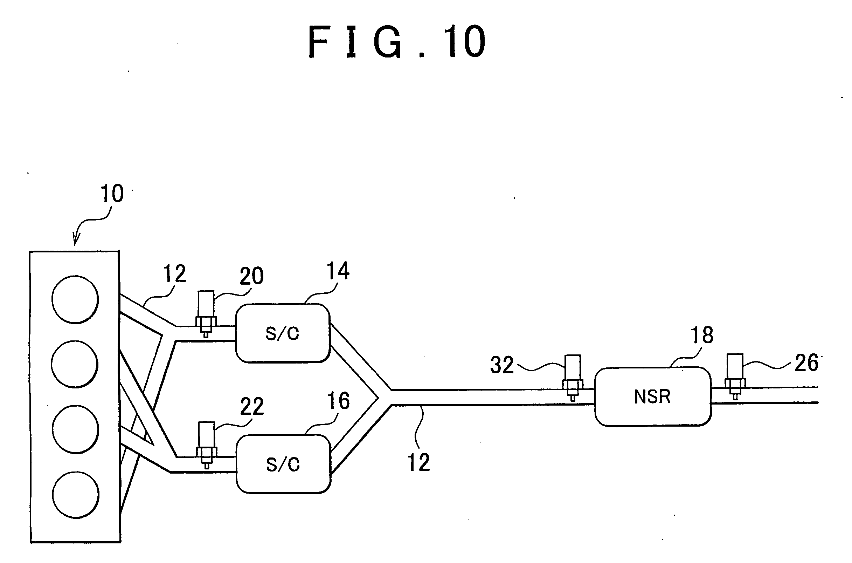

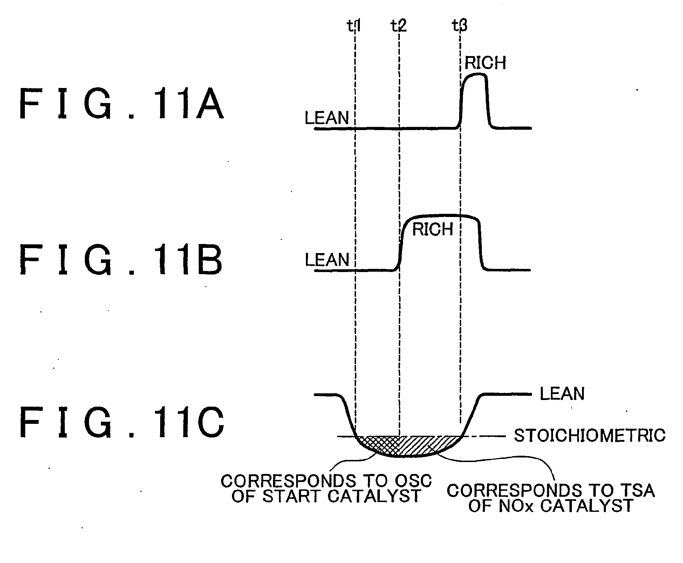

Next, a second example embodiment of the invention will be described with reference to FIGS. 10 and 11. However, the following description will focus on those points that differ from the first example embodiment described above. Descriptions similar to the first example embodiment will be simplified or omitted. FIG. 10 is a schematic view of a system configuration according to the second example embodiment of the invention. As shown in FIG. 10, in the system according to this second example embodiment, instead of the A/F sensor 24 in the first example embodiment, an $O_2$ sensor 32 that produces an output which suddenly changes depending on whether the air-fuel ratio of the exhaust gas is richer or leaner than the stoichiometric air-fuel ratio, is arranged upstream of the $NO_X$ catalyst 18. In all other regards, the system in the second example embodiment is similar to the system in the first example embodiment. Hereinafter, for the sake of simplifying the description, the $O_2$ sensor 32 arranged upstream of the $NO_X$ catalyst 18 will be referred to as the upstream $O_2$ sensor 32 and the $O_2$ sensor 26 arranged downstream of the $NO_X$ catalyst 18 will be referred to as the downstream $O_2$ sensor 26.

In the second example embodiment, as will be described later, when the rich spike is executed, the oxygen storage capacity OSC of the start catalysts 14 and 16, which are three-way catalysts, may be detected at the same time that the total stored amount TSA of the $NO_X$ catalyst 18 is detected.

FIGS. 11A to 11C are timing charts illustrating a method for detecting the oxygen storage capacity OSC of the start catalysts 14 and 16 and the total stored amount TSA of the $NO_X$ catalyst 18. FIG. 11A shows an output from the downstream $O_2$ sensor 26. FIG. 11B shows an output from the upstream $O_2$ sensor 32. FIG 11C shows an output from either the A/F sensors 20 or 22 arranged upstream of the start catalysts 14 and 16, or an average output from both the A/F sensors 20 and 22 (hereinafter, this output referred to as "A/F sensor output").

As shown in FIGS. 11A to 11C, when the rich spike is started and exhaust gas of the rich air-fuel ratio starts to be discharged from the internal combustion engine 10, first the A/F sensor output changes from the lean to the rich air-fuel ratio (time t1). Then when all of the oxygen that was stored in the start catalysts 14 and 16 is used up due to the reducing agent that flows into the start catalysts 14 and 16, exhaust gas of the rich air-fuel ratio starts to pass through to the downstream side of the start catalysts 14 and 16. As a result, the output of the upstream $O_2$ sensor changes from the lean to the rich air-fuel ratio (time t2).

In this way, the amount of reducing agent that has flowed into the start catalysts 14 and 16 between time t1 and time t2 (i.e., the portion with cross-hatching in FIG. 11C) corresponds to the oxygen storage capacity OSC of the start catalysts 14 and 16. Accordingly, the oxygen storage capacity OSC of the start catalysts 14 and 16 may be obtained by integrating the results of Expression (1) above from time t1 to time t2.

From time t2, the reducing agent starts to flow into the $NO_X$ catalyst 18. Then when all of the oxygen and $NO_X$ that were stored in the $NO_X$ catalyst 18 are used up due to the reducing agent, exhaust gas of the rich air-fuel ratio starts to pass through to the downstream side of the $NO_X$ catalyst 18. As a result, the output of the downstream $O_2$ sensor 26 changes from the lean to the rich air-fuel ratio (time t3).

In this way, the amount of reducing agent that has flowed into the $NO_X$ catalyst 18 between time t2 and time t3 (i.e., the portion with hatching in FIG. 11C) corresponds to the total stored amount TSA of the $NO_X$ catalyst 18. Accordingly, the total stored amount TSA of the $NO_X$ catalyst 18 may be obtained by integrating the results of Expression (1) above from time t2 to time t3.

In this second example embodiment, as described above, both the total stored amount TSA of the $NO_X$ catalyst 18 and the oxygen storage capacity OSC of the start catalysts 14 and 16 may be detected. Therefore, deterioration of the start catalysts 14 and 16 may also be diagnosed at the same time.

When calculating the amount of inflowing reducing agent, the exhaust air-fuel ratio may be calculated from the fuel injection quantity and the intake air amount GA of the internal combustion engine 10 instead of being obtained from the A/F sensor output.

All other aspects of the second example embodiment are similar to those of the first example embodiment described above so further description thereof will be omitted.

Incidentally, in the second example embodiment described above, the start catalysts 14 and 15 may be each be regarded as the "upstream catalyst" of the invention, and the upstream $O_2$ sensor 32 may be regarded as the "second exhaust gas sensor" of the invention. Also, the ECU 30 may be regarded as the "oxygen storage capacity calculating means" of the invention by calculating the oxygen storage capacity OSC of the start catalysts 14 and 16.

**Claims**

1.   A catalyst monitoring system that includes a $NO_X$ catalyst (18) arranged in an exhaust passage of an internal combustion engine, and a first exhaust gas sensor which is arranged downstream of the $NO_X$ catalyst (18) and outputs a signal according to an air-fuel ratio of exhaust gas,
    the catalyst monitoring system **characterised by** comprising:

     execution condition setting means (30) for setting a plurality of different air-fuel ratio control execution conditions;
     air-fuel ratio controlling means (30) for temporarily switching the air-fuel ratio of the exhaust gas of the internal combustion engine from a lean to a rich or stoichiometric air-fuel ratio when the plurality of different air-fuel ratio control execution conditions are satisfied;
     intake $NO_X$ amount obtaining means (30) for estimating or detecting a total intake $NO_X$ amount that flows into the $NO_X$ catalyst between the time that air-fuel ratio control ends and the time that the air-fuel ratio control starts the next time;
     total stored amount calculating means (30) for calculating a total stored amount based on the signal from the first exhaust gas sensor which is output during the air-fuel ratio control, the total stored amount corresponding to the sum of an oxygen stored amount and an $NO_X$ stored amount that have been stored in the $NO_X$ catalyst before the air-fuel ratio control starts; and
     oxygen stored amount calculating means (30) for calculating the oxygen stored amount out of the total stored amount based on a relationship between the intake $NO_X$ amount and the total stored amount, the relationship being established beforehand by executing the air-fuel ratio control with at least two different air-fuel ratio control execution conditions.

2.   The catalyst monitoring system according to claim 1, further comprising:

     oxygen storage capability monitoring means (30) for determining an oxygen storage capability of the $NO_X$ catalyst based on the calculated oxygen stored amount.

3.   The catalyst monitoring system according to claim 1 or 2, further comprising:

     $NO_X$ stored amount calculating means (30) for calculating an $NO_X$ stored amount by subtracting the oxygen stored amount from the total stored amount; and $NO_X$ storage capability monitoring means (30) for determining an $NO_X$ storage capability of the $NO_X$ catalyst based on the calculated $NO_X$ stored amount.

**4.** The catalyst monitoring system according to any one of claims 1 to 3, wherein
the plurality of different air-fuel ratio control execution conditions further include a condition that the intake $NO_X$ amount reaches a predetermined value, and
the execution condition setting means (30) sets the predetermined value as at least two levels.

**5.** The catalyst monitoring system according to any one of claims 1 to 4, wherein the oxygen stored amount calculating means (30) calculates a value corresponding to the total stored amount at the time when the intake $NO_X$ amount is zero by extrapolating the relationship between the intake $NO_X$ amount and the total stored amount, and sets the calculated value as the oxygen stored amount.

**6.** The catalyst monitoring system according to any one of claims 1 to 5, further comprising:

an upstream catalyst (14, 16) arranged upstream of the $NO_X$ catalyst;
an second exhaust gas sensor (32) which is arranged between the $NO_X$ catalyst and the upstream catalyst (14, 16), and which outputs a signal according to the air-fuel ratio of the exhaust gas; and
oxygen storage capacity calculating means (30) for calculating an oxygen storage capacity of the upstream catalyst (14, 16) based on the signal from the second exhaust gas sensor (32) which is output during the air-fuel ratio control,

wherein the total stored amount calculating means (30) calculates the total stored amount based on the signal from the second exhaust gas sensor (32) and the signal from the first exhaust gas sensor which are output during the air-fuel ratio control.

**7.** The catalyst monitoring system according to claim 1, wherein
the intake $NO_X$ amount obtaining means (30) estimates the intake $NO_X$ amount based on a relationship between i) a load and speed of the internal combustion engine and ii) an amount of $NO_X$ generated per unit time.

**8.** The catalyst monitoring system according to claim 1, wherein
the intake $NO_X$ amount obtaining means (30) detects the intake $NO_X$ amount based on an output from an $NO_X$ sensor arranged upstream of the $NO_X$ catalyst.

**9.** A catalyst monitoring method for a system that includes a $NO_X$ catalyst (18) arranged in an exhaust passage of an internal combustion engine, and a first exhaust gas sensor which is arranged downstream of the $NO_X$ catalyst and outputs a signal according to an air-fuel ratio of exhaust gas,
the catalyst monitoring method **characterised by** comprising:

a) setting a plurality of different air-fuel ratio control execution conditions;
b) switching the air-fuel ratio of the exhaust gas of the internal combustion engine temporarily from a lean to a rich or stoichiometric air-fuel ratio when the plurality of different air-fuel ratio control execution conditions are satisfied;
c) estimating or detecting a total intake $NO_X$ amount that flows into the $NO_X$ catalyst between the time that air-fuel ratio control ends and the time that the air-fuel ratio control starts the next time;
d) calculating a total stored amount based on the signal from the first exhaust gas sensor that is output during the air-fuel ratio control, the total stored amount corresponding to the sum of the oxygen stored amount and the $NO_X$ stored amount that have been stored in the $NO_X$ catalyst before the air-fuel ratio control starts; and
e) calculating the oxygen stored amount out of the total stored amount based on a relationship between the intake $NO_X$ amount and the total stored amount, the relationship being established beforehand by executing the air-fuel ratio control with at least two different air-fuel ratio execution conditions.

**Patentansprüche**

**1.** Katalysatorüberwachungssystem, das einen $NO_x$- in einem Abgasdurchgang einer Brennkraftmaschine angeordneten Katalysator (18) und einen ersten Abgassensor aufweist, der stromabwärts des $NO_x$-Katalysators (18) angeordnet ist und ein Signal gemäß einem Luft-Kraftstoff-Verhältnis von Abgas ausgibt,
wobei das Katalysatorüberwachungssystem **dadurch gekennzeichnet ist, dass** es Folgendes aufweist:
eine Ausführungsbedingungsfestsetzeinrichtung (30) zum Festsetzen einer Vielzahl von verschiedenen Luft-Kraftstoff-Verhältnis-Steuerungsausführbedingungen;

eine Luft-Kraftstoff-Verhältnis-Steuereinrichtung (30) zum vorübergehenden Umschalten des Luft-Kraftstoff-Verhältnisses des Abgases der Brennkraftmaschine von einem mageren zu einem fetten oder stöchiometrischen Luft-Kraftstoff-Verhältnis, wenn die Vielzahl von verschiedenen Luft-Kraftstoff-Verhältnis-Steuerungsausführbedingungen erfüllt ist;

eine Einlass-$NO_x$-Mengenbezugseinrichtung (30) zum Schätzen oder Erfassen einer Gesamteinlass-$NO_x$-Menge, die zwischen der Zeit, zu der die Luft-Kraftstoff-Verhältnis-Steuerung endet, und der Zeit, zu der die nächste Luft-Kraftstoff-Verhältnis-Steuerung beginnt, in den $NO_x$-Katalysator strömt;

eine Gesamtspeichermengenberechnungseinrichtung (30) zum Berechnen einer Gesamtspeichermenge basierend auf dem Signal von dem ersten Abgassensor, das während der Luft-Kraftstoff-Verhältnis-Steuerung ausgegeben wird, wobei die Gesamtspeichermenge der Summe an Speichermenge an Sauerstoff und Speichermenge an $NO_x$ entspricht, die in dem $NO_x$-Katalysator vor dem Beginn der Luft-Kraftstoff-Verhältnis-Steuerung gespeichert worden sind; und

eine Sauerstoffspeichermengenberechnungseinrichtung (30) zum Berechnen der Speichermenge an Sauerstoff aus der Gesamtspeichermenge basierend auf dem Verhältnis zwischen der Einlass-$NO_x$-Menge und der Gesamtspeichermenge, wobei das Verhältnis im Vorfeld durch Ausführen der Luft-Kraftstoff-Verhältnis-Steuerung mit wenigstens zwei verschiedenen Luft-Kraftstoff-Verhältnis-Steuerungsausführbedingungen aufgestellt worden ist.

2. Katalysatorüberwachungssystem nach Anspruch 1, das des Weiteren Folgendes aufweist:

eine Sauerstoffspeicherkapazitäts-überwachungseinrichtung (30) zum Bestimmen einer Sauerstoffspeicherkapazität des $NO_x$-Katalysators basierend auf der berechneten Sauerstoffspeichermenge.

3. Katalysatorüberwachungssystem nach Anspruch 1 oder 2, des Weiteren mit:

einer $NO_x$-Speichermengenberechnungseinrichtung (30) zur Berechnung einer $NO_x$-Speichermenge durch Abziehen der Sauerstoffspeichermenge von der Gesamtspeichermenge; und
eine $NO_x$-Speicherkapazitätsüberwachungseinrichtung (30) zum Bestimmen einer $NO_x$-Speicherkapazität des $NO_x$-Katalysators basierend auf der berechneten $NO_x$-Speichermenge.

4. Katalysatorüberwachungssystem nach einem der Ansprüche 1 bis 3, wobei
die Vielzahl von verschiedenen Luft-Kraftstoff-Verhältnis-Steuerungsausführbedingungen des Weiteren eine Bedingung umfasst, dass die Einlass-$NO_x$-Menge einen vorbestimmen Wert erreicht, und
die Ausführbedingungsfestsetzeinrichtung (30) den vorbestimmten Wert als wenigstens zwei Niveaus festsetzt.

5. Katalysatorüberwachungssystem nach einem der Ansprüche 1 bis 4, wobei die Sauerstoffspeichermengenberechnungseinrichtung (30) einen Wert, der der Gesamtspeichermenge zu der Zeit entspricht, zu der die Einlass-$NO_x$-Menge null ist, durch Extrapolieren der Beziehung zwischen der Einlass-$NO_x$-Menge und der Gesamtspeichermenge berechnet und den berechneten Wert als die Sauerstoffspeichermenge festsetzt.

6. Katalysatorüberwachungssystem nach einem der Ansprüche 1 bis 5, des Weiteren mit:

einem stromaufwärtigen Katalysator (14, 16), der stromaufwärts des $NO_x$-Katalysators angeordnet ist;
einen zweiten Abgassensor (32), der zwischen dem $NO_x$-Katalysator und dem stromaufwärtigen Katalysator (14, 16) angeordnet ist und ein Signal gemäß dem Luft-Kraftstoff-Verhältnis-Abgas ausgibt; und
eine Sauerstoffspeicherkapazitätsberechnungseinrichtung (30) zum Berechnen einer Sauerstoffspeicherkapazität des stromaufwärtigen Katalysators (14, 16) basierend auf dem Signal von dem zweiten Abgassensor (32), das während der Luft-Kraftstoff-Verhältnis-Steuerung ausgegeben wird,
wobei die Gesamtspeichermengenberechnungseinrichtung (30) die Gesamtspeichermenge basierend auf dem Signal von dem zweiten Abgassensor (32) und dem Signal von dem ersten Abgassensor berechnet, die während der Luft-Kraftstoff-Verhältnis-Steuerung ausgegeben werden.

7. Katalysatorüberwachungssystem nach Anspruch 1, wobei
die Einlass-$NO_x$-Mengenbezugseinrichtung (30) die Einlass-$NO_x$-Menge basierend auf einer Beziehung zwischen i) einer Last und Drehzahl der Brennkraftmaschine und ii) einer Menge an pro Zeiteinheit erzeugtem $NO_x$ schätzt.

8. Katalysatorüberwachungssystem nach Anspruch 1, wobei
die Einlass-$NO_x$-Mengenbezugseinrichtung (30) die Einlass-$NO_x$-Menge basierend auf einer Ausgabe von einem $NO_x$-Sensor erfasst, der stromaufwärts des $NO_x$-Katalysators angeordnet ist.

9. Katalysatorüberwachungsverfahren für ein System, das einen in einem Abgasdurchgang einer Brennkraftmaschine angeordneten NO$_x$-Katalysator (18) und einen ersten Abgassensor umfasst, der stromabwärts des NO$_x$-Katalysators angeordnet ist und ein Signal gemäß einem Luft-Kraftstoff-Verhältnis von Abgas ausgibt,
wobei das Katalysatorüberwachungsverfahren **dadurch gekennzeichnet ist, dass** es folgende Schritte umfasst:

a) Festsetzen einer Vielzahl von verschiedenen Luft-Kraftstoff-Verhältnis-Steuerungsausführbedingungen;
b) vorübergehendes Umschalten des Luft-Kraftstoff-Verhältnisses des Abgases der Brennkraftmaschine von einem mageren zu einem fetten oder stöchiometrischen Luft-Kraftstoff-Verhältnis, wenn die Vielzahl von verschiedenen Luft-Kraftstoff-Verhältnis-Steuerungsausführbedingungen erfüllt ist;
c) Schätzen oder Erfassen einer Gesamteinlass-NO$_x$-Menge, die zwischen der Zeit, zu der die Luft-Kraftstoff-Verhältnis-Steuerung endet, und der Zeit, zu der die Luft-Kraftstoff-Verhältnis-Steuerung das nächste Mal beginnt, in den NO$_x$-Katalysator strömt;
d) Berechnen einer Gesamtspeichermenge basierend auf dem Signal von dem ersten Abgassensor, das während der Luft-Kraftstoff-Verhältnis-Steuerung ausgegeben wird, wobei die Gesamtspeichermenge der Summe der Sauerstoffspeichermenge und der NO$_x$-Speichermenge entspricht, die in dem NO$_x$-Katalysator vor dem Beginn der Luft-Kraftstoff-Verhältnis-Steuerung gespeichert worden sind; und
e) Berechnen der Sauerstoffspeichermenge aus der Gesamtspeichermenge basierend auf einer Beziehung zwischen der Einlass-NO$_x$-Menge und der Gesamtspeichermenge, wobei die Beziehung im Vorfeld durch Ausführen der Luft-Kraftstoff-Verhältnis-Steuerung mit wenigstens zwei verschiedenen Luft-Kraftstoff-Verhältnis-Ausführbedingungen aufgestellt worden ist.

## Revendications

1. Système de surveillance de catalyseur qui comporte un catalyseur de NOx (18) agencé dans un passage d'échappement d'un moteur à combustion interne, et un premier capteur de gaz d'échappement qui est agencé en aval du catalyseur de NOx (18), et délivre en sortie un signal selon un rapport air-carburant de gaz d'échappement,
le système de surveillance de catalyseur **caractérisé par** le fait de comprendre :

un moyen (30) d'établissement de conditions d'exécution pour établir une pluralité de différentes conditions d'exécution de commande de rapport air-carburant ;
un moyen (30) de commande de rapport air-carburant pour changer temporairement le rapport air-carburant du gaz d'échappement du moteur à combustion interne d'un rapport air-carburant pauvre en un rapport air-carburant riche ou en un rapport stoechiométrique ou lorsque la pluralité de différentes conditions d'exécution de commande de rapport air-carburant sont satisfaites ;
un moyen (30) d'obtention de quantité de NOx d'admission pour estimer ou détecter une quantité totale de Nox d'admission qui s'écoule dans le catalyseur de NOx entre le moment où la commande de rapport air-carburant se termine et le moment où la commande de rapport air-carburant commence la fois suivante ;
un moyen (30) de calcul de quantité totale stockée pour calculer une quantité totale stockée sur la base du signal du premier capteur de gaz d'échappement qui est délivré en sortie durant la commande de rapport air-carburant, la quantité totale stockée correspondant à la somme d'une quantité d'oxygène stockée et d'une quantité de NOx stockée qui ont été stockées dans le catalyseur de NOx avant que la commande de rapport air-carburant ne commence ; et
un moyen (30) de calcul de quantité d'oxygène stockée pour calculer la quantité d'oxygène stockée parmi la quantité totale stockée sur la base d'une relation entre la quantité de NOx d'admission et la quantité totale stockée, la relation étant établie auparavant en exécutant la commande de rapport air-carburant avec au moins deux conditions différentes d'exécution de commande de rapport air-carburant.

2. Système de surveillance de catalyseur selon la revendication 1, comprenant en plus :

un moyen (30) de surveillance de capacité de stockage d'oxygène pour déterminer une capacité de stockage d'oxygène du catalyseur de NOx sur la base de la quantité d'oxygène stockée calculée.

3. Système de surveillance de catalyseur selon la revendication 1 ou 2, comprenant en plus :

un moyen (30) de calcul de quantité de NOx stockée pour calculer une quantité de Nox stockée en soustrayant la quantité d'oxygène stockée de la quantité totale stockée ; et
un moyen (30) de surveillance de capacité de stockage de NOx pour déterminer une capacité de stockage de NOx du catalyseur de NOx sur la base de la quantité de NOx stockée calculée.

**4.** Système de surveillance de catalyseur selon l'une quelconque des revendications 1 à 3, dans lequel
la pluralité de différentes conditions d'exécution de commande de rapport air-carburant comportent en plus une condition où la quantité de NOx d'admission atteint une valeur prédéterminée, et
le moyen (30) d'établissement de condition d'exécution établit la valeur prédéterminée comme au moins deux niveaux.

**5.** Système de surveillance de catalyseur selon l'une quelconque des revendications 1 à 4, dans lequel le moyen (30) de calcul de quantité d'oxygène stockée calcule une valeur correspondant à la quantité totale stockée au moment où la quantité de NOx d'admission est zéro en extrapolant la relation entre la quantité de NOx d'admission et la quantité totale stockée, et établit la valeur calculée comme quantité d'oxygène stockée.

**6.** Système de surveillance de catalyseur selon l'une quelconque des revendications 1 à 5, comprenant en plus :

un catalyseur en amont (14, 16) agencé en amont du catalyseur de NOw ;
un deuxième capteur (32) de gaz d'échappement qui est agencé entre le catalyseur de NOx et le catalyseur en amont (14, 16), et qui délivre en sortie un signal selon le rapport air-carburant du gaz d'échappement ; et
un moyen (30) de calcul de capacité de stockage d'oxygène pour calculer une capacité de stockage d'oxygène du catalyseur en amont (14, 16) sur la base du signal du deuxième capteur (32) de gaz d'échappement qui est délivré en sortie durant la commande de rapport air-carburant,
où le moyen (30) de calcul de quantité totale stockée calcule la quantité totale stockée sur la base du signal du deuxième capteur de gaz d'échappement (32) et du signal du premier capteur de gaz d'échappement qui sont délivrés en sortie durant la commande de rapport air-carburant.

**7.** Système de surveillance de catalyseur selon la revendication 1, dans lequel
le moyen (30) d'obtention de quantité de NOx d'admission estime la quantité de NOx d'admission sur la base d'une relation entre i) une charge et une vitesse du moteur à combustion interne et ii) une quantité de NOx généré par temps unitaire.

**8.** Système de surveillance de catalyseur selon la revendication 1, dans lequel
le moyen (30) d'obtention de quantité de NOx d'admission détecte la quantité de NOx d'admission sur la base d'une sortie depuis un capteur de NOx agencé en amont du catalyseur de NOx.

**9.** Procédé de surveillance de catalyseur pour un système qui comporte un catalyseur de NOx (18) agencé dans un passage d'échappement d'un moteur à combustion interne, et un premier capteur de gaz d'échappement qui est agencé en aval du catalyseur de NOx et délivre en sortie un signal selon un rapport air-carburant de gaz d'échappement,
le procédé de surveillance de catalyseur **caractérisé par** le fait de comprendre le fait de :

a) établir une pluralité de différentes conditions d'exécution de commande de rapport air-carburant ;
b) changer le rapport air-carburant du gaz d'échappement du moteur à combustion interne temporairement d'un rapport air-carburant pauvre en un rapport air-carburant riche ou en un rapport stoechiométrique lorsque la pluralité de différentes conditions d'exécution de commande de rapport air-carburant sont satisfaites ;
c) estimer ou détecter une quantité totale de NOx d'admission qui s'écoule dans le catalyseur de NOx entre le moment où la commande de rapport air-carburant se termine et le moment où la commande de rapport air-carburant commence la fois suivante ;
d) calculer une quantité totale stockée sur la base du signal du premier capteur de gaz d'échappement qui est délivré en sortie durant la commande de rapport air-carburant, la quantité totale stockée correspondant à la somme de la quantité d'oxygène stockée et de la quantité de Nox stockée qui ont été stockées dans le catalyseur de Nox avant que la commande de rapport air-carburant ne commence ; et
c) calculer la quantité d'oxygène stockée parmi la quantité totale stockée sur la base d'une relation entre la quantité de NOx d'admission et la quantité totale stockée, la relation étant établie auparavant en exécutant la commande de rapport air-carburant avec au moins deux différentes conditions d'exécution de rapport air-carburant.

# FIG.1

EP 2 052 137 B1

FIG. 2A

FIG. 2B

FIG. 2C

FIG. 2D

FIG. 2E

# FIG.3

# FIG.4

TOTAL STORED
AMOUNT TSA

INTERCEPT

OSC

INTAKE NOx AMOUNT INTO CATALYST

# FIG.5

TOTAL STORED
AMOUNT TSA

$TSA_2$

$TSA_1$

OSC

INTAKE NOx AMOUNT INTO CATALYST

# FIG.6

TOTAL STORED
AMOUNT TSA

OSC

INTAKE NOx AMOUNT INTO CATALYST

# FIG.7

TOTAL STORED
AMOUNT TSA

OSC

INTAKE NOx AMOUNT INTO CATALYST

20

# F I G . 8

STORED NOx
AMOUNT NSA

DETERMINING VALUE

INTAKE NOx AMOUNT INTO CATALYST

# F I G . 9

OPERATION FOR DETERMINING
CATALYST DETERIORATION

READ NOxIN — 100

NOxIN ≧ A ? — 102
NO

YES

FR ← 1 — 104

CALCULATE TSA — 106

IS DATA
STORAGE CONDITION
SATISFIED ? — 108
NO

YES

STORE TSA DATA — 110

IS DETERMINATION
EXECUTION CONDITION
SATISFIED ? — 112
NO

YES

CALCULATE OSC — 114

CALCULATE NSA — 116

IS OXYGEN
STORAGE CAPABILITY
NORMAL ? — 118

ABNORMAL

NORMAL

XOD ← 1 — 122

XOD ← 0 — 120

IS NOx
STORAGE CAPABILITY
NORMAL ? — 124

ABNORMAL

NORMAL

XND ← 1 — 128

XND ← 0 — 126

END

# FIG.10

EP 2 052 137 B1

F I G . 11A

F I G . 11B

F I G . 11C

t1    t2    t3

RICH

LEAN

RICH

LEAN

LEAN

STOICHIOMETRIC

CORRESPONDS TO OSC
OF START CATALYST

CORRESPONDS TO TSA
OF NOx CATALYST

# FIG.12

EP 2 052 137 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006053772 A

- JP 2827954 B